# EUROPÄISCHE PATENTSCHRIFT

(11) **EP 4 417 393 B1**
(45) Veröffentlichungstag und Bekanntmachung des Hinweises auf die Patenterteilung: **18.06.2025**
(21) Anmeldenummer: 23157335.3
(22) Anmeldetag: 17.02.2023
(51) Int. Cl.: B29C 48/25, B29C 48/40, B29C 48/55, B29C 48/535, B29C 48/625, B29B 7/38, A23P 30/20

(54) **EXTRUDER MIT DICHTELEMENT UND VERFAHREN ZUR HERSTELLUNG EINES NAHRUNGSMITTELS**
EXTRUDER WITH SEALING ELEMENT AND PROCESS FOR PRODUCING EDIBLE ARTICLE
EXTRUDEUSE A ELEMENT D'ETANCHEITE ET PROCÉDÉ DE FABRICATION D'UN PRODUIT ALIMENTAIRE

(43) Veröffentlichungstag der Anmeldung: 21.08.2024
(73) Patentinhaber: Bühler AG, 9240 Uzwil (CH)
(72) Erfinder: ROHRER, Patrick, 8444 Henggart (CH); DJELADINI, Semir, 9240 Uzwil (CH)
(74) Vertreter: Hepp Wenger Ryffel AG

(56) Entgegenhaltungen:
- DE-A1- 2 654 774
- DE-B3- 102019 006 844
- DE-C1- 19 506 415
- US-A- 3 522 214
- US-A- 4 521 026

## Beschreibung

Die vorliegende Erfindung betrifft einen Extruder, insbesondere zur Herstellung eines Nahrungsmittels oder Tierfutters, welcher über eine verbesserte Abdichtung der Prozesszone verfügt.

wie den Druckschriften US 4 521 026 A und US 3 522 214 A entnehmbar ist, stellen Extruder Maschinen dar, in denen Materialien wie Polymere, Elastomere oder proteinhaltige Mischungen für die Herstellung von Lebensmitteln einschliesslich Cerealien, Snacks, Tierfutter und alternativer Nahrungsmittel unter gewünschten Druck- und Temperaturbedingungen behandelt werden können. Ein typischer Extruder umfasst mindestens eine Extruderschneckenwelle, wobei jede der Extruderschneckenwellen einen Satz von Extruderschneckenelementen aufweist, die auf einer Tragwelle montiert sind. Die Extruderschneckenwellen sind in einem Zylinder untergebracht, welcher als Barrel bezeichnet wird. Ein Extruder umfasst üblicherweise mehrere Barrels, die Ende an Ende miteinander verbunden sind. Mehrere Barrels sind erforderlich, um die verschiedenen in dem Extruder durchzuführenden Prozesse wie Fördern, Kneten, Mischen, Entgasen, Dosieren und dergleichen auszuführen. Innerhalb des oder der Barrels befindet sich die Prozesszone des Extruders, d.h. der Bereich, in welchem die Extruderschneckenwellen beweglich angeordnet sind und durch ihre Bewegung eine Verarbeitung des in die Prozesszone eingeführten Materials bewirken. Das zu verarbeitende Material kann durch einen Einlass in die Prozesszone eingeführt werden. Der Einlass befindet sich üblicherweise an einem maschinenseitigen (d.h. dem Auslass des Extruders entgegengesetzten) Ende der Prozesszone und ist üblicherweise derart angeordnet, dass das Material von oben mit Hilfe der Schwerkraft in die Prozesszone eingeführt werden kann.

Ein derartiger Extruder ist in der DE 20 2010 003 416 U1 gezeigt. Die Extruderschneckenwelle ist dadurch gekennzeichnet, dass sie eine Tragwelle mit einer parallel zur Wellenachse verlaufenden Verzahnung mit Aussenzähnen aufweist. Auf diese Tragwelle können Schneckenelemente und Knetelemente mit Innenzähnen formschlüssig aufgebracht werden, indem die Innenzähne in die Aussenzähne der Tragwelle greifen.

Die Extruderschneckenwelle ist über ein Getriebe mit einem Motor verbunden, welcher die Extruderschneckenwelle in eine rotierende Bewegung versetzen kann. Motor und Getriebe sind maschinenseitig angeordnet, wobei zwischen der Prozesszone und dem Getriebe ein Zwischengehäuse (auch als Getriebelaterne bezeichnet) angeordnet ist. Das Zwischengehäuse ist von der Prozesszone durch eine Trennwand abgetrennt, wobei die Trennwand eine Öffnung aufweisen muss, durch welche die Tragwelle vom Getriebe in die Prozesszone geführt wird.

Diese Öffnung kann nicht dichtend verschlossen werden, da eine Drehbarkeit der Tragwelle innerhalb der Öffnung gewährleistet sein muss. Dies hat zur Folge, dass während längeren Betriebs des Extruders zu extrudierendes Material in das Zwischengehäuse gelangen und dieses verunreinigen kann. Neben dem unerwünschten Materialverlust führt dies zur Notwendigkeit eines erforderlichen Auseinanderbauens des Extruders zu Reinigungszwecken.

Dieses Problem wurde bislang nicht zufriedenstellend gelöst.

Üblicherweise wird bei konventionellen Extrudern die Tragwelle durch eine sogenannte Stopfbüchse geführt, in welcher die Tragwelle mit Unterstützung durch eine Ölschmierung rotiert. Eine derartige Stopfbüchse dichtet jedoch das Zwischengehäuse nicht von der Prozesszone des Extruders ab, so dass es während längeren Betriebs des Extruders zu dem vorstehend beschriebenen Verunreingungsproblem kommt. Zudem kann zur Schmierung eingesetztes Öl in die Prozesszone gelangen, was bei Extrudern zur Herstellung eines Nahrungsmittels oder Tierfutters unerwünscht ist. Dieses bekannte System ist aus Gesichtspunkten der Hygiene nachteilig.

In der Nahrungsmittel- oder Tierfutterindustrie wird daher eine Lösung bevorzugt, bei welcher die Tragwelle schmierölfrei in einer Gleithalterung angeordnet ist. Allerdings dichtet auch diese Gleithalterung das Zwischengehäuse nicht von der Prozesszone des Extruders ab, so dass es ebenfalls zu vorstehend beschriebenem Problem kommt.

Es war die Aufgabe der vorliegenden Erfindung, einen Extruder bereitzustellen, bei welchem das Zwischengehäuse des Extruders zuverlässig gegenüber der Prozesszone des Extruders abgedichtet ist.

Diese Aufgabe wird durch die Merkmale des Anspruchs 1 gelöst.

Es wurde erfindungsgemäss gefunden, dass ein Hindurchtreten von zu extrudierendem Material durch die Öffnung in der Trennwand zwischen Prozesszone und Zwischengehäuse eines Extruder zuverlässig verhindert werden kann, indem auf der prozesszonenseitigen Seite der Tragwelle ein besonderes Schneckenelement angeordnet ist. Dieses Schneckenelement wird erfindungsgemäss als Stauelement bezeichnet. Das Stauelement verhindert eine Förderung von zu extrudierendem Material in Richtung der Trennwand zwischen Prozesszone und Zwischengehäuse; das zu extrudierende Material wird vielmehr aufgestaut und am Durchtritt durch die Öffnung in der Trennwand gehindert, durch welche die Tragwelle der Extruderschnecke geführt ist.

Das erfindungsgemässe Stauelement hat eine Steigung von 5 bis 30 mm, vorzugsweise 10 bis 20 mm. Die Steigung eines Schneckenelements einer Extruderschnecke bezeichnet die Steilheit der Gänge (Windungen) des Schneckenelements. Diese Gänge winden sich schraubenförmig um einen Zentralabschnitt des Schneckenelements. Je grösser die Steigung, umso mehr sind die Gänge einer Position senkrecht zur zentralen Längsachse des Schneckenelements (d.h. der in Längsrichtung durch das Zentrum des Schneckenelements führenden Achse) ausgerichtet. Die Steigung beschreibt den Abstand zwischen zwei Gangpositionen, welche einen maximalen Abstand zur zentralen Längsachse des Schneckenelements haben. Je geringer dieser Abstand ist, umso grösser ist die Steigung des Schneckenelements.

Aufgrund der grossen Steigung weist das Stauelement vergleichsweise viele Gänge (Windungen) über eine vergleichsweise kure axiale Länge des Stauelements auf. Es ist erfindungsgemäss bevorzugt, dass das Stauelement 2 bis 10, vorzugsweise 3 bis 4 schraubenförmige Gänge aufweist.

Es ist weiterhin erfindungsgemäss bevorzugt, dass das Stauelement eine Länge von 30-90 mm, vorzugsweise 40-80 mm aufweist.

Somit kann das erfindungsgemässe Stauelement beispielsweise auf einer Länge (d.h. axialen Länge) von 40 mm bei einer Steigung von 10 mm 4 Gänge aufweisen.

Aufgrund seiner grossen Steigung bewirkt das erfindungsgemässe Stauelement keine Förderung von zu extrudierendem Material und verhindert somit eine Bewegung derartigen Materials in Richtung der Öffnung in der Trennwand zwischen Prozesszone und Zwischengehäuse.

Schneckenelemente mit einer derartig grossen Steigung sind beispielsweise aus der D1 10-2004 052 055 B4 bekannt. Dort ist ein einstückiges Schneckenelement gezeigt, in welchem ein Förderschneckensegment und ein Arbeitssegment mit einer grösseren Steigung als das Förderschneckensegment hintereinander angeordnet sind. Zwischen diesen Segmenten ist kein Spalt mit einer Breite von etwa 1 bis 3 mm vorhanden und kann aus fertigungstechnischen Gründen auch nicht bereitgestellt werden. Dieses Element wird nicht zum Abdichten einer Prozesszone vorgeschlagen. Zudem weist nur ein Abschnitt des einstückigen Schneckenelements eine Steigung auf, welche der Steigung des erfindungsgemässen Stauelements entspricht.

Das erfindungsgemässe Stauelement kann auf bekannte Weise auf einer Tragwelle einer Extruderschnecke angeordnet werden. Es ist erfindungsgemässe bevorzugt, dass das Stauelement eine Innenverzahnung und die Tragwelle eine Aussenverzahnung aufweist, wobei die Verzahnungen formschlüssig miteinander verbunden sind. Dies ist beispielsweise aus der DE 20 2010 003 416 U1 oder der WO 2013/030322 A1 bekannt.

Das erfindungsgemässe Stauelement ist auf einem Abschnitt der Tragwelle der Extruderschnecke angeordnet, welcher sich in der Prozesszone befindet. Dieser Abschnitt befindet sich zwischen dem Einlass in die Prozesszone und der Öffnung in der Trennwand zwischen Prozesszone und Zwischengehäuse.

Gemäss einer erfindungsgemässen Ausführungsform kann das Stauelement an der Öffnung in der Trennwand zwischen Zwischengehäuse und Prozesszone anliegen. Gemäss einer anderen erfindungsgemässen Ausführungsform ist das Stauelement derart auf der Tragwelle angeordnet, dass zwischen dem der Öffnung zugewandten Ende des Stauelements und der Öffnung ein Spalt von 1 bis 5 mm, vorzugsweise 1 bis 4 mm vorhanden ist. Erfindungsgemäss bevorzugt wird dies dadurch realisiert, dass das Stauelement auf beiden Seiten je einen Abschnitt aufweist, in welchem kein Gang vorhanden ist. Auf diese Weise wird im eingebauten Zustand auf beiden Seiten des Stauelements je ein Spalt ausgebildet, der vorzugsweise eine Breite im Bereich von 1 bis 5 mm aufweist. Gelangt während des Betriebs des Extruders Material in einen derartigen Spalt, wird es durch die Drehung der Tragwelle zurück gefördert. Der Schneckengang des Stauelements bleibt vollständig erhalten.

Zwischen dem erfindungsgemässen Stauelement und der Öffnung in der Trennwand zwischen Zwischengehäuse und Prozesszone befindet sich kein anderes Schneckenelement.

Gemäss einer erfindungsgemässen Ausführungsform ist das Stauelement derart auf der Tragwelle angeordnet, dass sein dem Einlass des Extruders zugewandtes Ende fluchtend mit der Begrenzung des Einlasses abschliesst, welche der der Öffnung in der Trennwand zwischen Zwischengehäuse und Prozesszone zugewandt ist. Mit anderen Worten ragt gemäss dieser Ausführungsform das Stauelement nicht in den Bereich der Prozesszone, welcher sich unterhalb des Einlasses befindet. Es existiert vorzugsweise aber auch keine Lücke zwischen dem Bereich der Prozesszone, welcher sich unterhalb des Einlasses befindet, und der Position des Stauelements. Das Stauelement ist somit stromabwärts des Einlasses des Extruders angeordnet.

Gemäss einer anderen erfindungsgemässen Ausführungsform kann das Stauelement aber auch derart auf der Tragwelle angeordnet sein, dass es in den Bereich der Prozesszone hineinragt, welcher sich unterhalb des Einlasses befindet. Es ist aber wesentlich, dass das Stauelement sich nicht über den gesamten Bereich der Prozesszone erstreckt, welcher sich unterhalb des Einlasses befindet. Vorzugsweise erstreckt sich bei dieser Ausführungsform das erfindungsgemässe Stauelement derart in den Bereich der Prozesszone, welcher sich unterhalb des Einlasses befindet, dass es maximal 10%, bevorzugter maximal 5% der axialen Länge dieses Bereichs einnimmt (d.h. in diesen Bereich hineinragt).

Das vorstehend beschriebene Stauelement kann in jedem herkömmlichen Extruder eingesetzt werden.

Die hier beschriebene Extruderschnecke umfasst eine Tragwelle und mindestens ein Stauelement, wobei das Stauelement eine Steigung von 5 bis 30 mm, vorzugsweise 10 bis 20 mm aufweist.

Das Stauelement kann hierbei wie vorstehend beschrieben ausgestaltet sein.

Gemäss der vorliegenden Erfindung ist mindestens ein vorstehend beschriebenes Stauelement bereitgestellt. Es ist aber auch möglich und im Fall von Mehrwellenextrudern bevorzugt, mehrere Stauelemente bereitzustellen. Beispielsweise könnten auf einer Tragwelle 1 bis 3 Stauelemente hintereinander ausgebildet sein und zusammen ein erfindungsgemässes Stauelement darstellen.

Im Fall von Mehrwellenextrudern ist vorzugsweise auf jeder Tragwelle jeder Extruderschnecke ein erfindungsgemässes Stauelement wie vorstehend beschrieben angeordnet. Besonders bevorzugt ist hierbei eine Anordnung, bei welcher auf verschiedenen Tragwellen befindliche Stauelemente ineinandergreifen. Auf diese Weise wird die abdichtende Wirkung der Stauelemente verstärkt und vorzugsweise zusätzlich ein Selbstreinigungseffekt erzielt.

Extruder sind hinlänglich bekannt. Es wird z.B. auf die WO 2012/158023 A1 oder auf die Extruder, insbesondere Doppelschneckenextruder, von Bühler verwiesen. Solche Extruder haben vorzugsweise ein L/D-Verhältnis (Gesamtlänge zu Schneckendurchmesser) im Bereich von 12 -60, vorzugsweise 20 bis 40. Erfindungsgemäß werden die Extruder vorzugsweise mit 100 bis 1000 U/min, besonders bevorzugt mit 200 bis 600 U/min und besonders bevorzugt mit 250 bis 350 U/min betrieben.

Der erfindungsgemässe Extruder umfasst einen Motor mit einem Getriebe, um die Extruderschnecken anzutreiben. Zu diesem Zweck ist die Tragwelle jeder vorhandenen Extruderschnecke operativ mit dem Getriebe verbunden. Dies kann auf herkömmlich bekannte Art erfolgen.

Der erfindungsgemässe Extruder umfasst weiterhin ein Extrudergehäuse mit einer im Gehäuse befindlichen Prozesszone und einem Einlass und Auslass. Das Extrudergehäuse umfasst vorzugsweise 2 bis 20 Barrel, bevorzugter 2 bis 15 Barrels. Die Barrel sind vorzugsweise stirnseitig miteinander verbunden und bilden zusammen das Extrudergehäuse.

Das Extrudergehäuse (beziehungsweise jedes der das Extrudergehäuse bildenden Barrels) weist eine Durchgangsbohrung auf. Die Durchgangsbohrung durchläuft das Extrudergehäuse axial durch dessen gesamte Länge. Innerhalb dieser Durchgangsbohrung befindet sich die Prozesszone des Extruders.

Das Gehäuse des Extruders ist vorzugsweise temperaturgesteuert. Das zu extrudierende Material wird unter Druck (üblicherweise 1 bis 400 bar, vorzugsweise 1 bis 200 bar) geknetet, um eine homogene Mischung zu bilden. Dabei wird in der Regel ein Energieaufwand von 10 bis 150 Wh/kg, vorzugsweise 10 bis 120 Wh/kg, besonders bevorzugt 15 bis 30 Wh/kg betrieben.

Der Einlass des Extruders dient zum Einbringen von Rohstoffen in einen ersten Abschnitt des Extruders. Dieser Einlass mündet in die Prozesszone. Der Einlass befindet sich üblicherweise und bevorzugt auf dem Extrudergehäuse, so dass Material unter Einwirkung der Schwerkraft in das Extrudergehäuse, genauer in der Prozesszone des Extruders, gelangen kann.

Das zu extrudierende Material kann direkt durch den Einlass in die Prozesszone gegeben werden. Vorzugsweise befindet sich oberhalb des Einlasses eine Dosiervorrichtung, mit welcher das zu extrudierende Material dosiert und gegebenenfalls vermischt wird, bevor es durch den Einlass geführt wird. Erfindungsgemäss bevorzugt kann das zu extrudierende Material vorgängig in einem herkömmlichen Vorkonditionierer vorbehandelt und von diesem, beispielsweise mittels einer herkömmlichen Förderschnecke, dem Einlass zugeführt werden.

Am dem zum Einlass entfernten Ende der Prozesszone befindet sich ein Auslass, durch welchen das extrudierte Material den Extruder verlässt. Der Auslass ist mit der Prozesszone verbunden.

Der Extruder verfügt typischerweise auch über eine Wasser-, eine Öl- und gegebenenfalls eine Dampfzufuhrleitung.

Der erfindungsgemässe Extruder umfasst weiterhin ein Zwischengehäuse (auch Getriebelaterne genannt), das auf herkömmlich bekannte Weise zwischen dem Extrudergehäuse und dem Getriebe angeordnet ist. Durch dieses Zwischengehäuse ist die Tragwelle der Extruderschnecke geführt, aber in diesem Abschnitt sind keine Schneckenelement auf der Tragwelle angeordnet.

Vorzugsweise bildet das dem Extrudergehäuse zugewandte Ende des Zwischengehäuses eine Trennwand; es kann aber auch eine separate Trennwand bereitgestellt werden. Durch diese Trennwand wird das Zwischengehäuse von der Prozesszone getrennt, welche sich im Extrudergehäuse befindet. In dieser Trennwand befindet sich eine Öffnung, durch welche die Tragwelle der Extruderschnecke geführt ist. Im Fall eines Mehrwellenextruders ist eine der Zahl von Extruderschnecken entsprechende Zahl von Öffnungen in der Trennwand vorhanden. Dies ist herkömmlich bekannt.

Der Übergangsbereich zwischen Zwischengehäuse und Prozesszone ist vorzugsweise schmiermittelfrei, um im Hinblick auf die Herstellung von Nahrungsmitteln oder Tierfutter die Hygiene des Extruders zu verbessern. Gemäss einer bevorzugten Ausführungsform der vorliegenden Erfindung ist in der Öffnung in der Trennwand eine Hülse angeordnet, durch welche die Tragwelle der Extruderschnecke geführt ist.

Gemäss einer weiteren bevorzugten Ausführungsform der vorliegenden Erfindung ist an der Trennwand oder in der Öffnung in der Trennwand eine Lagerung bereitgestellt, um die Tragwelle und gegebenenfalls eine vorgesehene Hülse zu stützen.

Innerhalb der Prozesszone sind neben dem wie vorstehend beschrieben angeordneten Stauelement weitere Schneckenelemente auf mindestens einem Abschnitt der Tragwelle angeordnet und bilden mit der Tragwelle eine Extruderschnecke. Diese zusätzlichen Schneckenelemente unterscheiden sich von dem Stauelement und sind von diesem getrennt. Diese Trennung erhöht die Flexibilität bei der Anordnung von unterschiedlichen Schneckenelementen auf der Tragwelle in gewünschte Reihenfolge.

Vorzugsweise sind die zusätzlichen Schneckenelemente ausgewählt aus der Gruppe bestehend aus Förderschneckenelementen, Mischelemente, Barriereelementen und Knetschneckenelementen. Schneckenelemente mit Erdmengerprofil sind besonders bevorzugt.

Diese zusätzlichen Schneckenelemente können in gewünschter Reihenfolge auf der Tragwelle angeordnet werden.

Wie vorstehend zu erfindungsgemässen Stauelemente ausgeführt können auch die zusätzlichen Schneckenelemente auf bekannte Weise auf einer Tragwelle einer Extruderschnecke angeordnet werden.

Es ist erfindungsgemässe bevorzugt, dass die zusätzlichen Schneckenelemente eine Innenverzahnung und die Tragwelle eine Aussenverzahnung aufweisen, wobei die Verzahnungen formschlüssig miteinander verbunden sind. Dies ist beispielsweise aus der DE 20 2010 003 416 U1 oder der WO 2013/030322 A1 bekannt. Erfindungsgemäss bevorzugt ist der Extruder ein Doppelschneckenextruder mit zwei Extruderschnecken, wobei jede Extruderschnecke mindestens ein erfindungsgemässes Stauelement aufweist. Jedes Stauelement ist wie vorstehend beschrieben auf einer Tragwelle des Doppelschneckenextruders angeordnet.

Besonders bevorzugt ist hierbei eine Anordnung, bei welcher auf verschiedenen Tragwellen befindliche Stauelemente und zusätzlichen Schneckenelemente ineinandergreifen.

Gemäß einer bevorzugten Ausführungsform der vorliegenden Erfindung kann am Ausgang des Extruders ein Kühlwerkzeug wie eine Kühldüse vorgesehen sein. Kühlwerkzeuge für Extruder sind hinreichend bekannt. Zwischen Extruder und Kühlwerkzeug kann vorzugsweise eine bekannte Verteilereinheit angeordnet sein.

Der erfindungsgemässe Extruder weist den Vorteil auf, dass er ohne unnötigen Materialverlust uns insbesondere bevorzugt unter sehr guten hygienischen Bedingungen betrieben werden kann. Dies macht ihn insbesondere geeignet für die Herstellung eines Nahrungsmittels oder eines Tierfutters.

Die vorliegende Erfindung betrifft somit auch ein Verfahren zur Herstellung eines Nahrungsmittels oder eines Tierfutters mit einem erfindungsgemässen Extruder gemäß dem Anspruch 1, umfassend den Schritt der Einführung eines Materials zur Herstellung des Nahrungsmittels oder Tierfutters durch den Einlass des Extruders in die Prozesszone des Extruders, wobei das in die Prozesszone eingeführte Material ausschliesslich in Richtung des Auslasses des Extruders gefördert wird.

Wie vorstehend beschrieben wird dies durch die Bereitstellung eines erfindungsgemässen Stauelement erreicht, welches eine Materialförderung in Richtung der Öffnung in der Trennwand zwischen Zwischengehäuse und Prozesszone verhindert. Erfindungsgemäss bevorzugt erfolgt die Förderung des Materials in der Prozesszone unter schmiermittelfreien Bedingungen. Dies ist möglich, weil die Öffnung in der Trennwand zwischen Zwischengehäuse und Prozesszone durch das erfindungsgemässe Stauelement abgedichtet wird und keine Massnahmen wie die Bereitstellung einer Stopfbüchse mit Ölschmierung erforderlich sind. Die vorliegende Erfindung betrifft somit auch die Verwendung eines erfindungsgemässen Extruders gemäß dem Anspruch 1 zur Herstellung eines Nahrungsmittels oder Tierfutters.

Erfindungsgemäss können sämtliche Nahrungsmittel oder Tierfutter hergestellt werden, welche üblicherweise durch Extrusion hergestellt werden. Beispielsweise sind proteinhaltige Mischungen für die Herstellung von Lebensmitteln einschliesslich Cerealien, Snacks, Tierfutter und alternativer Nahrungsmittel (wie alternativer Fleisch- und Fischprodukte) genannt.

Die vorliegende Erfindung wird nachfolgend anhand von nicht einschränkenden Ausführungsbeispielen unter Bezugnahme auf Figuren näher beschrieben. In den Figuren bezeichnen gleiche Bezugszeichen gleiche Elemente. Es zeigen:
- Fig. 1: eine schematische Darstellung einer Ausführungsform von zwei erfindungsgemässen Stauelementen
- Fig. 2: eine Querschnittsansicht durch die erfindungsgemässen Stauelemente gemäss Fig. 1
- Fig. 3: eine schematische Darstellung einer Ausführungsform eines Stauelements mit gangfreien Abschnitten
- Fig. 4: eine schematische Darstellung einer Ausführungsform einer Tragwelle mit Aussenverzahnung
- Fig. 5: eine schematische Darstellung einer Ausführungsform eines erfindungsgemässen Extruders

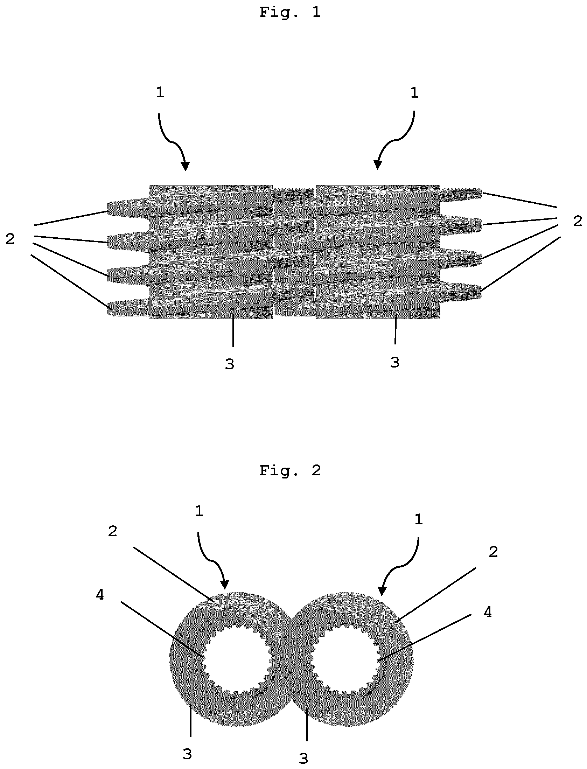

In Fig. 1 ist schematische Darstellung einer Ausführungsform von zwei erfindungsgemässen Stauelementen 1 gezeigt. Die nachfolgenden Ausführungen treffen aber analog auf ein einziges Stauelement zu.

Das erfindungsgemässe Stauelement 1 umfasst einen Zentralabschnitt 3 und schraubenförmig darauf angeordnete Gänge (Windungen) 2. In dieser Ausführungsform weist jedes erfindungsgemässe Stauelement 1 vier Gänge 2 auf, welche eine erfindungsgemäss bevorzugte grosse Steigung von 10 mm aufweisen. Jedes erfindungsgemässe Stauelement 1 gemäss Fig. 1 weist eine Länge von 40 mm auf.

In Fig. 1 ist weiterhin zu erkennen, wie zwei erfindungsgemässe Stauelemente 1 ineinandergreifen können. Dies ist beispielsweise in einem Doppelschneckenextruder realisierbar, in welchem jeweils ein Stauelement 1 auf jeder der zwei Tragwellen angeordnet ist.

In Fig. 2 ist eine Querschnittsansicht durch die erfindungsgemässen Stauelemente 1 gemäss Fig. 1 gezeigt. Es ist zu erkennen, dass jedes erfindungsgemässe Stauelement 1 eine Innenverzahnung 4 aufweist, welche mit einer (hier nicht gezeigten) Aussenverzahnung einer Tragwelle 5 formschlüssig verbunden werden kann.

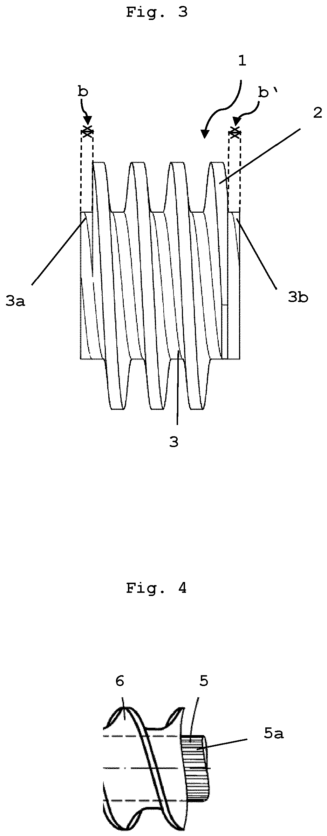

In Fig. 3 ist eine schematische Darstellung einer Ausführungsform eines Stauelements 1 mit gangfreien Abschnitten gezeigt. Wie in der Ausführungsform gemäss Fig. 1 umfasst das erfindungsgemässe Stauelement 1 in der Ausführungsform gemäss Fig.3 einen Zentralabschnitt 3 und schraubenförmig darauf angeordnete Gänge (Windungen) 2.

In dieser Ausführungsform weist jedes erfindungsgemässe Stauelement 1 vier Gänge 2 auf, welche eine erfindungsgemäss bevorzugte grosse Steigung von 10 mm aufweisen. Das erfindungsgemässe Stauelement 1 gemäss Fig. 3 weist eine Länge von 40 mm auf. An beiden Enden des Stauelements 1 ist ein Abschnitt 3a, 3b vorhanden, welcher gangfrei ist. Auf diese Weise wird im eingebauten Zustand auf beiden Seiten des Stauelements 1 je ein Spalt ausgebildet, der vorzugsweise eine Breite b, b' im Bereich von 1 bis 3 mm aufweist und dem Abschnitt 3a, 3b entspricht. Gelangt während des Betriebs des Extruders Material in einen derartigen Spalt, wird es durch die Drehung der Tragwelle zurück gefördert. Der Schneckengang des Stauelements bleibt vollständig erhalten.

In Fig. 4 ist schematische Darstellung einer Ausführungsform einer Tragwelle 5 mit Aussenverzahnung 5a gezeigt. Die Aussenverzahnung der Tragwelle 5 kann formschlüssig mit der Innenverzahnung 4 eines erfindungsgemässen Stauelements 1 oder (wie hier dargestellt) mit einem zusätzlichen Schneckenelement 6 mit entsprechender Innenverzahnung verbunden werden. Das zusätzliche Schneckenelement 6 weist eine geringere Steigung der Gänge auf als das Stauelement 1.

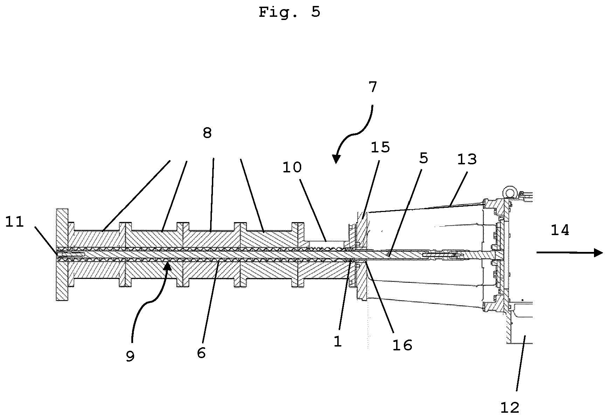

In Fig. 5 ist schematische Darstellung einer Ausführungsform eines erfindungsgemässen Extruder 7 gezeigt. Der Extruder 7 umfasst ein Extrudergehäuse 8, dass in der in Fig. 5 gezeigten Ausführungsform aus vier Barrels besteht. Innerhalb des Extrudergehäuses 8 befindet sich eine Prozesszone 9, welche durch eine axiale Durchgangsbohrung durch das Extrudergehäuse 8 (beziehungsweise der dieses bildenden Barrels) realisiert ist.

Der Extruder 7 weist einen Einlass 10 auf, durch welchen Material in die Prozesszone 9 eingeführt werden kann. Am entgegengesetzten Ende der Prozesszone 9 befindet sich ein Auslass 11, durch welchen extrudiertes oder gemischtes Material den Extruder 7 verlassen kann.

Innerhalb der Prozesszone 9 ist eine Extruderschnecke angeordnet, welche aus einer Tragwelle 5, einem darauf angeordneten Stauelement 1 und mehreren zusätzlichen auf der Tragwelle 5 angeordneten Schneckenelementen 6 aufgebaut ist. Die Tragwelle 5 erstreckt sich durch ein Zwischengehäuse 13 zu einem Getriebe 12, welches wiederum mit einem (nicht gezeigten) Motor 14 operativ verbunden ist. Die Tragwelle 5 kann durch den Motor 14 über das Getriebe 12 in eine Drehbewegung versetzt werden.

Das Zwischengehäuse 13 ist zwischen dem Getriebe 12 und dem Extrudergehäuse 8 beziehungsweise der darin befindlichen Prozesszone 9 angeordnet. Das Zwischengehäuse 13 ist durch eine Trennwand 15 von dem Extrudergehäuse 8 beziehungsweise der darin befindlichen Prozesszone 9 getrennt. In der Trennwand 15 befindet sich eine Öffnung 16, durch welche die Tragwelle 5 der Extruderschnecke geführt ist.

In dem Bereich zwischen Einlass 10 und der Öffnung 16 ist das Stauelement 1 angeordnet, wobei vorzugsweise zwischen dem Stauelement 1 und der Trennwand 15 ein Spalt vorhanden ist, welcher in dieser Ausführungsform etwa 4 mm gross ist. Das Stauelement 1 erstreckt sich in dieser Ausführungsform nicht in den Bereich der Prozesszone 9 unterhalb des Einlasses 10.

Erfindungsgemäss bevorzugt wird der Spalt zwischen Stauelement und Trennwand 15 durch Verwendung eines Stauelements 1 gemäss Fig. 3 realisiert, das auf beiden Seiten je einen Abschnitt aufweist, in welchem kein Gang vorhanden ist. Auf diese Weise wird im eingebauten Zustand auf beiden Seiten des Stauelements 1 je ein Spalt ausgebildet, der vorzugsweise eine Breite im Bereich von 1 bis 4 mm aufweist. Gelangt während des Betriebs des Extruders Material in einen derartigen Spalt, wird es durch die Drehung der Tragwelle zurück gefördert. Der Schneckengang des Stauelements 1 bleibt vollständig erhalten.

## Patentansprüche

1. Extruder, umfassend
einen Motor (14) mit einem Getriebe (12),
mindestens ein Extrudergehäuse (8) mit einer im Gehäuse (8) befindlichen Prozesszone (9) und einem Einlass (10) und einem Auslass (11),
ein Zwischengehäuse (13), das zwischen dem Extrudergehäuse (8) und dem Getriebe (12) angeordnet ist und durch eine Trennwand (15) von der Prozesszone getrennt ist, wobei sich in der Trennwand (15) eine Öffnung (16) befindet,
eine Tragwelle (5), die im Extruder (7) angeordnet ist, wobei Schneckenelemente (6) auf mindestens einem Abschnitt der Tragwelle (5) angeordnet sind und mit der Tragwelle (5) eine Extruderschnecke bilden, wobei die Extruderschnecke im Extrudergehäuse (8) beweglich angeordnet ist,
wobei auf einem Abschnitt der Tragwelle (5), welcher sich in der Prozesszone (9) befindet, mindestens ein Stauelement (1) angeordnet ist,
**dadurch gekennzeichnet, dass** die Öffnung (16) in der Trennwand (15) zwischen Zwischengehäuse (13) und der Prozesszone (9) durch das mindestens eine Stauelement (1) abgedichtet wird, wobei das Stauelement (1) eine Steigung von 5 bis 30 mm, vorzugsweise 10 bis 20 mm aufweist.

2. Extruder nach Anspruch 1, **dadurch gekennzeichnet, dass** das Stauelement (1) 2 bis 10, vorzugsweise 3 bis 4 schraubenförmige Gänge (2) aufweist.

3. Extruder nach Anspruch 1 oder 2, **dadurch gekennzeichnet, dass** das Stauelement (1) eine Innenverzahnung (4) und die Tragwelle (5) eine Aussenverzahnung (5a) aufweist, wobei die Verzahnungen (4, 5a) formschlüssig miteinander verbunden sind.

4. Extruder nach einem der vorhergehenden Ansprüche, **dadurch gekennzeichnet, dass** das Stauelement (1) eine Länge von 30-90 mm, vorzugsweise 40-80 mm aufweist.

5. Extruder nach einem der vorhergehenden Ansprüche, **dadurch gekennzeichnet, dass** das Stauelement (1) an beiden Enden je einen gangfreien Abschnitt (3a, 3b) aufweist.

6. Extruder nach einem der vorhergehenden Ansprüche, **dadurch gekennzeichnet, dass** auf der Tragwelle (5) in der Prozesszone (9) zusätzliche Schneckenelemente (6) angeordnet sind, welche sich von dem Stauelement (1) unterscheiden und von diesem getrennt sind.

7. Extruder nach Anspruch 5, **dadurch gekennzeichnet, dass** die zusätzlichen Schneckenelemente (6) ausgewählt sind aus der Gruppe bestehend aus Förderschneckenelementen, Mischelemente, Barriereelementen und Knetschneckenelementen.

8. Extruder nach einem der vorhergehenden Ansprüche, **dadurch gekennzeichnet, dass** das Stauelement (1) stromabwärts des Einlasses (10) des Extruders (7) angeordnet ist und nicht in einen Bereich der Prozesszone (9) unterhalb des Einlasses (10) ragt.

9. Extruder nach einem der vorhergehenden Ansprüche, **dadurch gekennzeichnet, dass** der Extruder (7) ein Doppelschneckenextruder mit zwei Extruderschnecken ist, wobei jede Extruderschnecke mindestens ein Stauelement (1) gemäss einem der Ansprüche 1 bis 8 aufweist.

10. Extruder nach einem der vorhergehenden Ansprüche, **dadurch gekennzeichnet, dass** der Übergangsbereich (16) zwischen Zwischengehäuse (13) und Prozesszone (9) schmiermittelfrei ist.

11. Verfahren zur Herstellung eines Nahrungsmittels oder eines Tierfutters mit einem Extruder (7) gemäss einem der Ansprüche 1 bis 10, umfassend den Schritt der Einführung eines Materials zur Herstellung des Nahrungsmittels oder Tierfutters durch den Einlass (10) des Extruders (7) in die Prozesszone (9) des Extruders (7), wobei das in die Prozesszone (9) eingeführte Material ausschliesslich in Richtung des Auslasses (11) des Extruders (7) gefördert wird.

12. Verfahren nach Anspruch 11, **dadurch gekennzeichnet, dass** die Förderung des Materials in der Prozesszone (9) unter schmiermittelfreien Bedingungen erfolgt.

13. Verfahren nach Anspruch 11 oder 12, **dadurch gekennzeichnet, dass** die Förderung des Materials in der Prozesszone (9) ausschliesslich in Richtung des Auslasses (11) des Extruders (7) durch mindestens ein Stauelement (1) erreicht wird, wobei das Stauelement (1) eine Steigung von 5 bis 30 mm, vorzugsweise 10 bis 20 mm aufweist.

14. Verwendung eines Extruders (7) gemäss einem der Ansprüche 1 bis 10 zur Herstellung eines Nahrungsmittels oder Tierfutters.

## Claims

1. Extruder, comprising
a motor (14) with a gearbox (12),
at least one extruder housing (8) with a process zone (9) located in the housing (8) and an inlet (10) and an outlet (11),
an intermediate housing (13), which is arranged between the extruder housing (8) and the gearbox (12) and is separated from the process zone by a partition wall (15), an opening (16) being located in the partition wall (15),
a support shaft (5), which is arranged in the extruder (7), wherein screw elements (6) are arranged on at least one section of the support shaft (5) and form an extruder screw with the support shaft (5), wherein the extruder screw is movably arranged in the extruder housing (8),
wherein at least one retaining element (1) is arranged on a section of the support shaft (5) which is located in the process zone (9),
**characterized in that** the opening (16) in the partition wall (15) between the intermediate housing (13) and the process zone (9) is sealed by the at least one retaining element (1), the retaining element (1) having a pitch of 5 to 30 mm, preferably 10 to 20 mm.

2. Extruder according to claim 1, **characterized in that** the retaining element (1) has 2 to 10, preferably 3 to 4 helical flights (2).

3. Extruder according to claim 1 or 2, **characterized in that** the retaining element (1) has an internal toothing (4) and the support shaft (5) has an external toothing (5a), wherein the toothings (4, 5a) are positively connected to one another.

4. Extruder according to one of the preceding claims, **characterized in that** the retaining element (1) has a length of 30-90 mm, preferably 40-80 mm.

5. Extruder according to one of the preceding claims, **characterized in that** the retaining element (1) has a flight-free section (3a, 3b) at each end.

6. Extruder according to one of the preceding claims, **characterized in that** additional screw elements (6) are arranged on the support shaft (5) in the process zone (9), which screw elements are different from the retaining element (1) and are separate from the latter.

7. Extruder according to claim 5, **characterized in that** the additional screw elements (6) are selected from the group consisting of screw conveyor elements, mixing elements, barrier elements and kneading screw elements.

8. Extruder according to one of the preceding claims, **characterized in that** the retaining element (1) is arranged downstream of the inlet (10) of the extruder (7) and does not project into a region of the process zone (9) below the inlet (10).

9. Extruder according to one of the preceding claims, **characterized in that** the extruder (7) is a twin-screw extruder with two extruder screws, each extruder screw having at least one retaining element (1) according to one of claims 1 to 8.

10. Extruder according to one of the preceding claims, **characterized in that** the transition region (16) between the intermediate housing (13) and the process zone (9) is lubricant-free.

11. A method for producing a food product or an animal feed with an extruder (7) according to any one of claims 1 to 10, comprising the step of introducing a material for producing the food product or animal feed through the inlet (10) of the extruder (7) into the process zone (9) of the extruder (7), wherein the material introduced into the process zone (9) is conveyed exclusively in the direction of the outlet (11) of the extruder (7).

12. Method according to claim 11, **characterized in that** the material is conveyed in the process zone (9) under lubricant-free conditions.

13. Method according to claim 11 or 12, **characterized in that** the conveying of the material in the process zone (9) is achieved exclusively in the direction of the outlet (11) of the extruder (7) by at least one retaining element (1), the retaining element (1) having a pitch of 5 to 30 mm, preferably 10 to 20 mm.

14. Use of an extruder (7) according to any one of claims 1 to 10 for the manufacture of a food product or animal feed.

## Revendications

1. Extrudeuse, comprenant
un moteur (14) avec une transmission (12),
au moins un boîtier d'extrudeuse (8) avec une zone de processus (9) se trouvant dans le boîtier (8) et une entrée (10) et une sortie (11),
un boîtier intermédiaire (13), qui est disposé entre le boîtier d'extrudeuse (8) et la transmission (12) et qui est séparé de la zone de processus par une paroi de séparation (15), une ouverture (16) se trouvant dans la paroi de séparation (15),
un arbre de support (5) disposé dans l'extrudeuse (7),
des éléments de vis (6) étant disposés sur au moins un tronçon de l'arbre porteur (5) et formant avec l'arbre porteur (5) une vis d'extrudeuse, la vis d'extrudeuse étant disposée de manière mobile dans le boîtier d'extrudeuse (8),
au moins un élément de retenue (1) étant disposé sur une section de l'arbre porteur (5) qui se trouve dans la zone de processus (9),
**caractérisé en ce que** l'ouverture (16) dans la paroi de séparation (15) entre le boîtier intermédiaire (13) et la zone de processus (9) est rendue étanche par le au moins un élément de retenue (1), l'élément de retenue (1) présentant un pas de 5 à 30 mm, de préférence de 10 à 20 mm.

2. Extrudeuse selon la revendication 1, **caractérisée en ce que** l'élément de retenue (1) présente 2 à 10, de préférence 3 à 4 couloirs en forme d'hélice (2).

3. Extrudeuse selon la revendication 1 ou 2, **caractérisée en ce que** l'élément de retenue (1) présente une denture intérieure (4) et l'arbre porteur (5) une denture extérieure (5a), les dentures (4, 5a) étant reliées entre elles par complémentarité de forme.

4. Extrudeuse selon l'une des revendications précédentes, **caractérisée en ce que** l'élément de retenue (1) présente une longueur de 30 à 90 mm, de préférence de 40 à 80 mm.

5. Extrudeuse selon l'une des revendications précédentes, **caractérisée en ce que** l'élément de retenue (1) présente à chacune de ses deux extrémités une section (3a, 3b) dépourvue de gangue.

6. Extrudeuse selon l'une des revendications précédentes, **caractérisée en ce que** des éléments de vis supplémentaires (6) sont disposés sur l'arbre de support (5) dans la zone de processus (9), lesquels sont différentes de l'élément de retenue (1) et sont séparés de celui-ci.

7. Extrudeuse selon la revendication 5, **caractérisée en ce que** les éléments de vis supplémentaires (6) sont choisis dans le groupe constitué par des éléments de vis de transport, des éléments de mélange, des éléments de barrière et des éléments de vis de malaxage.

8. Extrudeuse selon l'une des revendications précédentes, **caractérisée en ce que** l'élément de retenue (1) est disposé en aval de l'entrée (10) de l'extrudeuse (7) et ne fait pas saillie dans une région de la zone de processus (9) située en dessous de l'entrée (10).

9. Extrudeuse selon l'une quelconque des revendications précédentes, **caractérisée en ce que** l'extrudeuse (7) est une extrudeuse bivis à deux vis d'extrusion, chaque vis d'extrusion comportant au moins un élément de retenue (1) selon l'une quelconque des revendications 1 à 8.

10. Extrudeuse selon l'une des revendications précédentes, **caractérisée en ce que** la zone de transition (16) entre le boîtier intermédiaire (13) et la zone de processus (9) est exempte de lubrifiant.

11. Procédé de fabrication d'un produit alimentaire ou d'un aliment pour animaux avec une extrudeuse (7) selon l'une des revendications 1 à 10, comprenant l'étape d'introduction d'un matériau pour la fabrication du produit alimentaire ou de l'aliment pour animaux à travers l'entrée (10) de l'extrudeuse (7) dans la zone de processus (9) de l'extrudeuse (7), le matériau introduit dans la zone de traitement (9) étant transporté exclusivement en direction de la sortie (11) de l'extrudeuse (7).

12. Procédé selon la revendication 11, **caractérisé en ce que** le transport du matériau dans la zone de processus (9) est effectué dans des conditions exemptes de lubrifiant.

13. Procédé selon la revendication 11 ou 12, **caractérisé en ce que** le transport du matériau dans la zone de processus (9) exclusivement en direction de la sortie (11) de l'extrudeuse (7) est obtenu par au moins un élément de retenue (1), l'élément de retenue (1) présentant un pas de 5 à 30 mm, de préférence de 10 à 20 mm.

14. Utilisation d'une extrudeuse (7) selon l'une quelconque des revendications 1 à 10 pour la fabrication d'un produit alimentaire ou d'un aliment pour animaux.
